# EUROPÄISCHE PATENTSCHRIFT

(11) **EP 2 030 786 B1**
(45) Veröffentlichungstag und Bekanntmachung des Hinweises auf die Patenterteilung: **12.12.2012**
(21) Anmeldenummer: 08015107.9
(22) Anmeldetag: 27.08.2008
(51) Int. Cl.: B32B 38/18, B27N 7/00, B44C 5/04, B30B 15/30, B27N 3/22

(54) **Verfahren zum Aufpressen einer mindestens einlagigen Oberflächenbeschichtung auf eine Holzwerkstoffplatte sowie Beschickvorrichtung für eine Kurztaktpresse**
Method for pressing a surface coating of at least one layer onto a wood board and feeding device for a short cycle press
Procédé d'application d'un revêtement de surface ayant au moins une couche sur une plaque de matière dérivée du bois, et dispositif d'alimentation pour une presse à cycle court

(30) Priorität: 28.08.2007 DE 102007040805
(43) Veröffentlichungstag der Anmeldung: 04.03.2009
(73) Patentinhaber: Flooring Technologies Ltd., Pieta PTA 9044 (MT)
(72) Erfinder:
(74) Vertreter: Kalkoff & Partner

(56) Entgegenhaltungen:
- DE-A1- 2 448 356
- DE-A1- 2 928 231
- DE-A1- 10 360 187
- US-A- 3 977 535

## Beschreibung

Die Erfindung betrifft ein Verfahren zum Aufpressen einer mindestens einlagigen Oberflächenbeschichtung auf eine Holzwerkstoffplatte, wobei die Holzwerkstoffplatte eine unterseitig aufgetragenen, getrocknete, nicht-ausgehärtete, duroplastische Kunstharzschicht aufweist, in einer Kurztaktpresse, die eine obere und eine untere beheizbare Preßplatte sowie eine Beschickvorrichtung umfaßt. Weiterhin betrifft die Erfindung eine Beschickvorrichtung für eine Kurztaktpresse sowie eine Kurztaktpresse.

Holzwerkstoffplatten umfassen alle Werkstoffe, die aus Holz oder überwiegend aus Holz bestehen und die in verarbeiteter Form plattenförmig vorliegen. Holzwerkstoffplatten können aus Furnier unterschiedlicher Stärke, sowie aus Leisten, Holzfasern oder einer Kombination hieraus hergestellt sein.

Holzwerkstoffplatten werden für verschiedene Anwendungen beschichtet. Dies geschieht um der Oberfläche ein bestimmtes Aussehen zu geben und/oder um die Oberfläche unempfindlicher gegen bestimmte Belastungen zu machen.

Im Sinne der erstgenannten Anforderung wird die Platte mit einem Dekor versehen, das entweder aufgestrichen, aufgesprüht, aufgedruckt oder in Form eines bedruckten Papiers aufgebracht wird. Die Dekorschicht muß in der Regel durch eine zusätzliche Beschichtung geschützt werden. Dies kann durch ein Overlay geschehen, ein mit duroplastischem Kunstharz getränktes, durchsichtiges Papier. Die verwendeten duroplastischen Kunstharze weisen in ausgehärtetem Zustand eine gute Verschleißfestigkeit auf, die bei Bedarf durch Zusätze, wie z. B. Korund-Partikel, noch erhöht werden kann.

Duroplastische Kunstharze, wie Phenolharze, Melamin und/oder Harnstoffharze, können flüssig verarbeitet und vorgetrocknet werden, härten jedoch nur beim gleichzeitigen Einwirken von Druck (ca. 20-40 bar) und Hitze (z. B. 180°C) aus. In der industriellen Fertigung geschieht dies in einer beheizten Presse, die das Overlay (und das Dekor) mit der Holzwerkstoffplatte verpresst. Diese Kunstharze haben die unerwünschte Eigenschaft, daß sie während des Aushärtens einer Schrumpfung unterliegen, was beim Verpressen mit der Oberfläche der Platte zu Spannungen führt, die die Platte verformen und somit unbrauchbar machen.

Um diesem Effekt entgegenzuwirken, verwendet man einen Gegenzug, typischerweise in Form eines in Kunstharz getränkten Papiers, ähnlich dem Overlay, das auf die gegenüberliegende Seite der Platte aufgebracht wird. Hierdurch wird erreicht, daß sich die Spannungen auf Ober- und Unterseite gegenseitig ausgleichen.

Um ebene, beschichtete Platten herzustellen, müssen also nach dem Stand der Technik, z.B. DE 103 60 187 oder DE 197 18 866, bisher mindestens drei Lagen (Gegenzug, Holzwerkstoffplatte und Dekorschicht bzw. Overlay) aufeinander positioniert, in die Presse verfahren oder verpresst werden. Die Anforderung, daß ein Paket, zusammengesetzt aus dem Gegenzug, der Platte sowie mindestens einer, in der Regel zwei oder mehr Schichten der Oberflächenbeschichtung in einem Arbeitsgang verpresst werden muß, führt zu Problemen. Es ist sehr aufwendig, die einzelnen Schichten gegen Verschiebungen abzusichern, was insbesondere für eine richtige Positionierung des Dekors wichtig ist. (Beim Beschleunigen und Abbremsen des Pakets neigt vor allem die Platte zum Verrutschen auf dem Gegenzug).

Nach dem Stand der Technik wird das Paket mittels einer Beschickvorrichtung gesichert, die die Schichten des Pakets aufeinander auf längsseitig angeordnete Leisten auflegt, gegebenenfalls auf diese Leisten klemmt und die Rahmen mit den Paketen anschließend in die Presse transportiert. Die Leisten müssen vor dem eigentlichen Preßvorgang entfernt und zurückgeführt werden. Der hohe Aufwand bei der Handhabung der Beschickvorrichtung führt zu langen Taktzeiten und setzt die Wirtschaftlichkeit des Verfahrens herab.

Um den Aufwand bei der Handhabung der Beschickvorrichtung zu erleichtern, schlägt die Druckschrift DE 29 28 231 der Firma Dieffenbacher GmbH & Co. KG vor, den Beschichtungsträger mit den zu beschichtenden Lagen über eine elektrostatische Aufladung aneinander zu fixieren.

Die Druckschrift DE 24 48 356 der Heinrich Wemhöner KG beschreibt eine Kurztaktpresse, die mit einer auf Förderbändern beruhenden Bestückungsvorrichtung beladen werden kann. Über unterschiedlichste Schaltvorrichtungen kann auf die Einlauf- und Auslaufgeschwindigkeit des Pressguts aus der Presse Einfluss genommen werden. Eine Fixierung des Pressguts auf den Förderbändern ist nicht vorgesehen.

Zum Verpressen des Pakets werden typischerweise Kurztaktpressen verwendet, die sich durch vergleichsweise kurze Presszeiten (ca. 10 Sekunden) auszeichnen. Eine solche Presse zum Aufpressen von Beschichtungen, die duroplastisches Kunstharz enthalten, benötigt als funktionelle Teile zwei Preßplatten, die beheizbar sind, und die mit hohem Druck gegeneinander gepreßt werden können.

Beim derzeitigen Stand der Technik kann der Zeitaufwand für das Beschicken und Entleeren der Pressen mit den zur Verfügung stehenden technischen Mitteln nicht mehr wesentlich verkürzt werden. Somit ist es Aufgabe der vorliegenden Erfindung, die Chargierzeit zu verkürzen. Als Chargierzeit wird hier und im Folgenden die Zeit bezeichnet, die zwischen dem Ende eines Pressvorgangs, gekennzeichnet durch das Abheben der Preßplatten von der Holzwerkstoffplatte, und dem Beginn des nächsten Preßvorgangs, gekennzeichnet durch das Aufsetzen der Preßplatten, vergeht. Dieser Zeitraum umfaßt das Verfahren der Preßplatten, das Austragen der verpressten Holzwerkstoffplatte sowie das Einfahren der nächsten Holzwerkstoffplatte.

Die Aufgabe wird gelöst durch ein Verfahren nach Anspruch 1. Bei diesem Verfahren zum Aufpressen einer mindestens einlagigen Oberflächenbeschichtung auf eine Holzwerkstoffplatte in einer Kurztaktpresse, die eine obere und eine untere beheizbare Preßplatte sowie eine Beschickvorrichtung umfaßt, wird mittels der Beschickvorrichtung wenigstens eine Lage eines Beschichtungsmaterials auf der Oberseite der Holzwerkstoffplatte, die eine unterseitig flüssig aufgetragene, getrocknete, nicht-ausgehärtete, duroplastische Kunstharzschicht aufweist, positioniert und in einer definierten Position gehalten. Dann wird die Holzwerkstoffplatte in den Raum zwischen den Preßplatten eingebracht und anschließend wird die Oberflächenbeschichtung mit der Holzwerkstoffplatte verpresst. Abschließend wird die beschichtete Holzwerkstoffplatte ausgetragen.

Die Aufgabe wird weiter gelöst durch eine Beschickvorrichtung für eine Kurztaktpresse nach Anspruch 9. Diese umfasst gemäß einer ersten alternativen Ausführungsform ein erstes Förderband, das die Beschickvorrichtung durchläuft, sowie ein zweites Förderband, das an das erste Förderband anschließt und das eine Kurztaktpresse sowie die Abnahmestation durchläuft, oder gemäß einer zweiten alternativen Ausführungsform ein erstes Förderband, das die Beschickstation durchläuft, sowie ein zweites Förderband, das an das erste Förderband anschließend angeordnet ist und die Kurztaktpresse durchläuft, sowie ein drittes Förderband, das an das zweite Förderband anschließend angeordnet ist und die Abnahmestation durchläuft, wobei im Betriebszustand eine Holzwerkstoffplatte und wenigstens eine Lage eines Beschichtungsmaterials auf dem ersten Förderband aufliegen und dort durch einen Anschlag, der in das Förderband integriert ist gegen Positionsveränderungen gesichert sind.

Schließlich wird die Aufgabe gelöst durch eine Kurztaktpresse nach Anspruch 16, die dadurch gekennzeichnet ist, daß diese eine Beschickvorrichtung gemäß einem der Ansprüche 9 bis 15 umfaßt.

Die Preßplatten der verwendeten Kurztaktpresse können grundsätzlich verschieden angeordnet sein. Bevorzugt ist bei der vorliegenden Erfindung eine Anordnung der Platten übereinander, wobei die untere Platte während des Pressens stationär bleibt, während die obere Platte abgesenkt wird. Vereinfachend werden die Preßplatten im Folgenden als "untere" und "obere" Platte bezeichnet, wodurch andere Ausführungsformen der Erfindung jedoch nicht ausgeschlossen werden sollen.

In einer bevorzugten Ausführung des Verfahrens besteht der flüssige Gegenzug aus Melamin, einem Phenolharz und/oder einem Harnstoffharz, da sich diese Harze durch zahlreiche vorteilhaften Materialeigenschaften und niedrige Materialkosten auszeichnen. Der flüssige Gegenzug wird auf der Unterseite der Holzwerkstoffplatte aufgetragen und getrocknet, aber nicht ausgehärtet. Dadurch kann die Holzwerkstoffplatte problemlos manipuliert werden, ohne daß ein separater Gegenzug zu handhaben ist. Ein Verrutschen der Platte auf dem Gegenzug ist ausgeschlossen.

In Übereinstimmung mit dem Aufbau der Oberflächenbeschichtung, der aus herkömmlichen Verfahren bekannt ist, besteht beim erfindungsgemäßen Verfahren die Oberflächenbeschichtung bevorzugt aus zwei oder mehr Lagen. Dies ermöglicht eine flexiblere Gestaltung der Oberfläche. So kann man z.B. das attraktive Aussehen einer oder mehrerer Dekorschichten mit der Robustheit einer darüber angeordneten Schicht aus abriebfestem Lack oder Harz kombinieren.

Bei Verwendung einer mit einem flüssigen aufgetragenen, getrockneten, aber nicht ausgehärtetem Gegenzug beschichteten Holzwerkstoffplatte kann auf einen aufwendigen Fixiermechanismus verzichtet werden, da die Fixierung eines separaten unterseitigen Gegenzugs an der Holzwerkstoffplatte entfällt. Die Platte, die die stabilste Schicht des Preßgutpakets darstellt, bildet nunmehr die unterste Lage, was erheblich zur Vereinfachung des Fixiervorgangs beiträgt. Somit müssen die einzelnen Pakete nicht mehr mit einer aufwendigen Beschickvorrichtung und Entleervorrichtung in die Presse und aus der Presse transportiert werden. Erfindungsgemäß genügt hier ein Anschlag, der in ein Förderband integriert werden kann, das in die Presse führt. Als Anschlag wird in diesem Zusammenhang jede Art von Vorrichtung bezeichnet, die das Preßgut in wenigstens einer Richtung gegen horizontale Positionsveränderung sichert. In einer besonderen Ausführungsform der Erfindung wird jeweils ein Anschlag durch Leisten gebildet, die quer zur Laufrichtung des Förderbandes ausgerichtet sind. In einer Weiterbildung der Erfindung weist das Förderband mehrere Anschläge auf.

In einer weiteren Ausführungsform der Erfindung sind Mittel zur Positionssicherung einer Holzwerkstoffplatte an oder in der Kurztaktpresse angeordnet. Dies bietet den großen Vorteil, daß auch bei einer nicht exakten Positionierung des Förderbandes die Holzwerkstoffplatte in Bezug auf die Kurztaktpresse richtig positioniert wird. Es kann sich bei dieser Ausführung z. B. um verschiebliche Leisten handeln, die beim Ausrichten der Holzwerkstoffplatte und der Oberflächenbeschichtung als Anschlag dienen, die aber beim Fördern der Platte oder beim Zusammenfahren der Presse verschoben werden.

Das Förderband läuft über die untere Preßplatte, so daß mittels des Bandes das Preßgut zwischen die beiden Preßplatten eingebracht werden kann, und läuft unterhalb der Preßplatte zurück. Da das Förderband sich während des Pressens zwischen der unteren beheizbaren Platte und dem Preßgut befindet, muß dieses zum einen beständig gegenüber den hierbei typischerweise auftretenden Temperaturen sein, also wenigstens bis 200°C, bevorzugt bis wenigstens 250°C, besonders bevorzugt bis wenigstens 280°C, zum anderen sollte es eine hinreichend hohe Wärmeleitfähigkeit aufweisen, um nicht das Aufheizen des Preßguts zu verzögern. Die Wärmeleitfähigkeit sollte über 5 JK⁻¹m⁻¹s⁻¹ liegen, was z.B. für sämtliche metallischen Werkstoffe erfüllt ist. Bevorzugt ist eine Wärmeleitfähigkeit von über 20 JK⁻¹m⁻¹s⁻¹, weiter bevorzugt über 150 JK⁻¹m⁻¹s⁻¹.

Eine weitere Anforderung an das Förderband ist, daß keinerlei Rückstände von unausgehärtetem oder ausgehärtetem Kunstharz daran haften. Um dieser Anforderung sowie der nach Hitzebeständigkeit und allgemeiner Robustheit nachzukommen, besteht in einer bevorzugten Ausführungsform der Erfindung das Förderband aus Aramid und ist mit Polytetrafluoroethylen beschichtet.

Da beim erfindungsgemäßen Verfahren auf aufwendige Fixiervorrichtungen, die nach dem Stand der Technik einige Tonnen wiegen, verzichtet werden kann, ist die notwendige Leistungsaufnahme der Beschickvorrichtung drastisch reduziert. Sie beträgt in einer Weiterbildung der Erfindung unter 40 kW, bevorzugt unter 30 kW, besonders bevorzugt unter 20 kW.

Nach dem Verpressen und Austragen der Platten aus der Presse ist es notwendig, diese zur Weiterverarbeitung, Verpackung, Lagerung etc. vom Förderband zu entfernen. Zu diesem Zweck umfaßt in einer bevorzugten Ausführungsform der Erfindung die Beschickvorrichtung eine Vorrichtung zur Abnahme der verpressten Materialien. Diese kann z. B. die Platten mittels Saughebern manipulieren, es sind aber auch andere Mechanismen möglich.

Der Transport des Preßguts bzw. der beschichteten Platten zwischen Auf- und Abnahme kann mittels eines oder mehrerer Förderbänder erfolgen. Verschiedene Varianten sind denkbar.

Erfindungsgemäß umfaßt die Beschickvorrichtung ein erstes Förderband sowie ein zweites Förderband gemäß der ersten oder der zweiten Alternative. Hierbei kann für das zweite Förderband ein anderes Material gewählt werden als für das erste. Gegebenenfalls kann beim zweiten Band auch auf Mittel zur Positionssicherung verzichtet werden und es kann mit höheren Beschleunigungen arbeiten.

Gemäß einer Alternative der Erfindung umfaßt die Beschickvorrichtung ein erstes Förderband, das die Beschickstation durchläuft, sowie ein zweites Förderband, das an das erste Förderband anschließend angeordnet ist und das die Kurztaktpresse sowie die Abnahmestation durchläuft. Bei dieser Ausführung kann das erste Förderband aus einem Material bestehen, das keine besondere Temperaturbeständigkeit oder Wärmeleitfähigkeit aufweist, da es am Preßvorgang nicht beteiligt ist. Dies ermöglicht die Wahl eines Materials, das z. B. preiswert und/oder leicht ist.

Gemäß einer weiteren Alternative der Erfindung umfaßt die Beschickvorrichtung ein erstes Förderband, das die Beschickstation durchläuft, sowie ein zweites Förderband, das an das erste Förderband anschließend angeordnet ist und die Kurztaktpresse durchläuft, sowie ein drittes Förderband, das an das zweite Förderband anschließend angeordnet ist und die Abnahmestation durchläuft. In dieser Ausführung können Vorteile bereits beschriebener Ausführungen kombiniert werden. So kann z. B. für das erste Förderband ein preiswertes Material gewählt werden, während man beim dritten Band auf Mittel zur Positionssicherung verzichten kann.

Durch das vereinfachte Beschickverfahren liegt bei der vorliegenden Erfindung die Chargierzeit unter 8 Sekunden, bevorzugt unter 7 Sekunden. Chargierzeiten von 5-6 Sekunden sind möglich. Dieser Wert liegt unter den nach dem Stand der Technik typischen von ca. 8-12 Sekunden.

Auch die Preßzeit läßt sich verkürzen, da wegen des vereinfachten Beschickvorgangs die kritische Liegezeit, also die Zeit vom Beginn des Einbringens des Paketes in die Presse bis zum Verpressen verkürzt wird. Bei Vorrichtungen nach dem Stand der Technik beeinflußt die kritische Liegezeit auch die Preßzeit, da innerhalb der Liegezeit ein unerwünschtes vorzeitiges Aushärten des duroplastischen Kunstharzes erfolgen kann. Eine solche vorzeitig ausgehärtete Harzschicht ist unbrauchbar. Da das Aushärten um so schneller erfolgt, je höher die Temperatur ist, muß die Temperatur während der kritischen Liegezeit unter einem bestimmten Wert gehalten werden, womit im Wesentlichen auch die Temperatur für den Preßvorgang vorgegeben ist, da eine Veränderung innerhalb der kurzen Taktzeiten praktisch nicht möglich ist. Somit ist aber auch die Preßzeit nach unten begrenzt. Beim erfindungsgemäßen Verfahren kann die kritische Liegezeit deutlich reduziert werden, da zum einen das Entfernen der Rahmen entfällt, zum anderen durch das Fehlen derselben das in die Presse einzubringende Paket niedriger ist und somit der Hubweg der oberen Preßplatte zwischen geöffneter und geschlossener Position kleiner. Daher kann auch das Schließen schneller erfolgen. Dank der kürzeren Liegezeit liegt die Temperatur der Preßplatten beim vorliegenden Verfahren bei mindestens 180°C, bevorzugt mindestens 220°C, weiter bevorzugt mindestens 250°C, wodurch sich die Preßzeit auf unter 10 Sekunden, bevorzugt unter 8 Sekunden, besonders bevorzugt unter 7 Sekunden, senken läßt.

In einer bevorzugten Ausführung des Verfahrens ist die Chargierzeit nicht größer als die Preßzeit. Dies stellt gegenüber Verfahren nach dem Stand der Technik einen wichtigen Fortschritt dar, da bei diesen das Chargieren, das nur der Vorbereitung der eigentlichen Verarbeitung dient, den Hauptteil der Taktzeit einnimmt und somit die Presse als teuerster Anlagenteil überwiegend im Leerlauf arbeitet. Somit wird die Wirtschaftlichkeit durch das neue Verfahren deutlich erhöht.

Die Vorteile der vorliegenden Erfindung liegen zum einen in der kürzeren Taktzeit, bedingt durch die kürzere Beschick- sowie Preßzeit. Hierdurch wird eine höhere Produktivität der Anlage erreicht. Da die schweren Beschickvorrichtungen und Entleervorrichtungen entfallen, kann die Anlage mit weniger Leistung betrieben werden. Auch werden die Kosten für Anschaffung, Wartung und Instandsetzung der Leisten zum Sichern der Preßgutpakete eingespart. Da die Beschickvorrichtung nur noch geringe Lasten bewegen muß, unterliegt sie weniger Verschleiß. Der Rückführungsprozeß für die Leisten entfällt, womit Energie, Kosten und Platz eingespart werden.

### Ausführungsbeispiel:

Im Folgenden wird die Funktion der Erfindung anhand von Abbildungen erläutert. Hierbei zeigt
- Fig. 1:: Eine Seitenansicht einer Schnittzeichnung einer Ausführungsform der Beschickvorrichtung für eine Kurztaktpresse vor dem Preßvorgang
- Fig. 2:: Eine Seitenansicht einer Schnittzeichnung der Ausführungsform der Beschickvorrichtung für eine Kurztaktpresse aus Fig.1 während des Preßvorgangs
- Fig. 3:: Eine Seitenansicht einer Schnittzeichnung der Ausführungsform der Beschickvorrichtung für eine Kurztaktpresse aus Fig.1 nach dem Preßvorgang

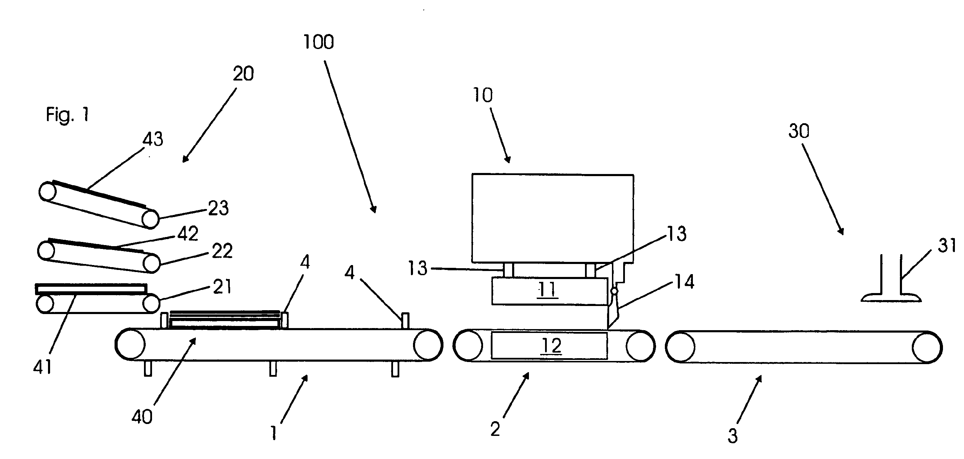

Bei der in Fig. 1-3 dargestellten Ausführungsform der Beschickvorrichtung 100 ist das Förderband unterteilt in ein Beschickförderband 1, ein Pressenförderband 2 und ein Abnahmeförderband 3, die in der genannten Abfolge aneinander angrenzend angeordnet sind. Das Beschickförderband 1 durchläuft eine Beschickstation 20 zum Zusammenstellen des Preßguts, das Pressenförderband 2 durchläuft eine Kurztaktpresse 10, in der das Preßgut verpresst wird und das Abnahmeförderband 3 durchläuft eine Abnahmestation 30 für das fertig verpresste Produkt.

Im Betrieb werden in einer Beschickstation 20 mittels eines ersten, zweiten und dritten Zuführförderbandes 21, 22, 23 eine Holzwerkstoffplatte 41 mit unterseitig angebrachtem flüssigen Gegenzug, ein Dekorpapier 42 und ein Overlay 43 auf dem aus Polyethylenterephthalat-Polyesterfolie (BOPET) gefertigten Beschickförderband 1 platziert. Die Holzwerkstoffplatte 41 wird auf dem Beschickförderband 1 abgelegt und auf dieser werden wiederum das Dekorpapier 42 und anschließend das Overlay 43 abgelegt und so zu einem Preßgutpaket 40 zusammengefaßt. Durch eine Reihe von Beschickanschlägen 4, die auf dem Beschickförderband 1 angeordnet sind, wird das Preßgut 40, bestehend aus Holzwerkstoffplatte 41, Dekorpapier 42 und Overlay 43, dort gegen Positionsveränderungen gesichert.

Das Preßgut 40 mit einer Fläche von 207 x 560 cm, das in unverpresstem Zustand eine Dicke von etwa 2 cm aufweist, wird mittels des Beschickförderbands 1 in Richtung des Pressenförderbandes 2 verfahren. Das Pressenförderband 2 ist zur höheren Temperaturbeständigkeit aus Aramid gefertigt und mit Polytetrafluoroethylen beschichtet. Wenn das Preßgut 40 mit dem Pressenförderband 2 in Berührung kommt, läuft dieses mit einer Geschwindigkeit, die in etwa derjenigen des Beschickförderbands 1 entspricht, so daß Beschleunigungskräfte auf das Preßgut 40 vermieden werden. Anschließend wird das Preßgut 40 mittels des Pressenförderbandes 2 in die Kurztaktpresse 10 verfahren. Diese umfaßt eine untere Preßplatte 12 und eine obere Preßplatte 11, die durch Hubmittel 13 vertikal verfahren werden kann. Beide Preßplatten 11, 12 sind aus Stahl gefertigt und mittels Öl indirekt beheizbar. Die Fläche der Preßplatten 11, 12 beträgt 220 x 570 cm.

Die erfindungsgemäße Beschickvorrichtung erfordert keine separaten Mittel zum Fixieren des Preßguts von oben. Sie ist daher gegenüber Anlagen nach dem Stand der Technik sehr flach ausgelegt. Da allein die Dicke des zu Preßguts 40 zu berücksichtigen ist, beträgt der Hubweg der oberen Preßplatte 11 lediglich 6 cm, bezogen auf die Oberfläche des Pressenförderbandes 2. Das Pressenförderband 2 weist keine Anschläge zur Sicherung des Preßguts auf. Dafür umfaßt die Kurztaktpresse Mittel zur Positionssicherung, die in Form eines leistenförmigen Pressenanschlags 14 ausgebildet sind, der schwenkbar an der Kurztaktpresse 10 angeordnet ist. Soll Preßgut 40 aufgenommen werden, ist der Pressenanschlag 14 nach unten geschwenkt und die obere Preßplatte 11 ist nach oben verfahren. Dieser Zustand ist in Fig. 1 dargestellt.

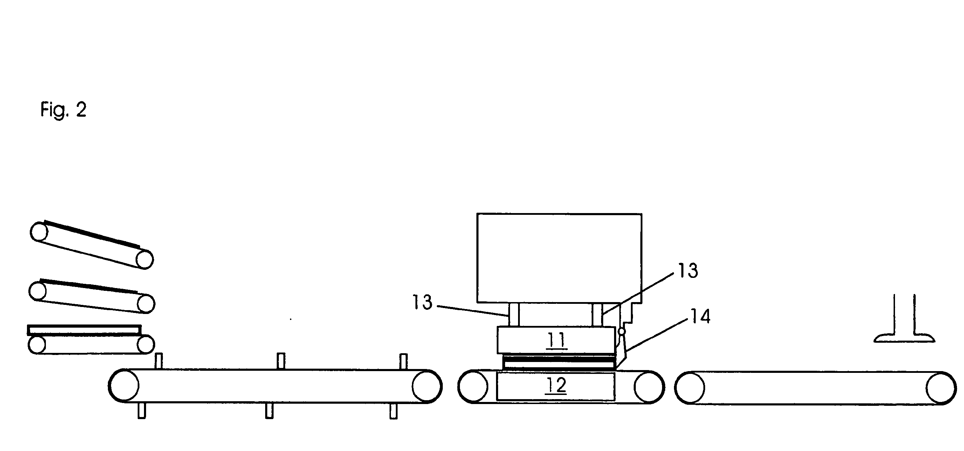

Das Preßgut 40 wird mittels des Pressenförderbandes 2 innerhalb von 4 Sekunden in den Raum zwischen den Preßplatten 11,12 verfahren. Dann stoppt das Pressenförderband 2 und das Preßgut 40 wird durch den Anschlag 14 gegen Verschiebungen gesichert. Danach schwenkt der Pressenanschlag 14 nach oben während die obere Preßplatte 11 innerhalb von 0.5 Sekunden abgesenkt wird. Dieser Zustand ist in Fig. 2 dargestellt. Unter Einwirkung von einem Druck von 40 bar und einer Temperatur von 220°C werden das Overlay sowie der flüssige Gegenzug mit der Holzwerkstoffplatte 41 verpreßt. Die Dauer des Verpreßvorgangs beträgt 7 Sekunden. Anschließend wird die obere Preßplatte 11 innerhalb von 0.5 Sekunden angehoben und das Preßgut 40 wird mittels des Pressenförderbandes 2 innerhalb von 4 Sekunden aus der Presse ausgetragen, während neues Preßgut in die Kurztaktpresse 10 eingetragen wird.

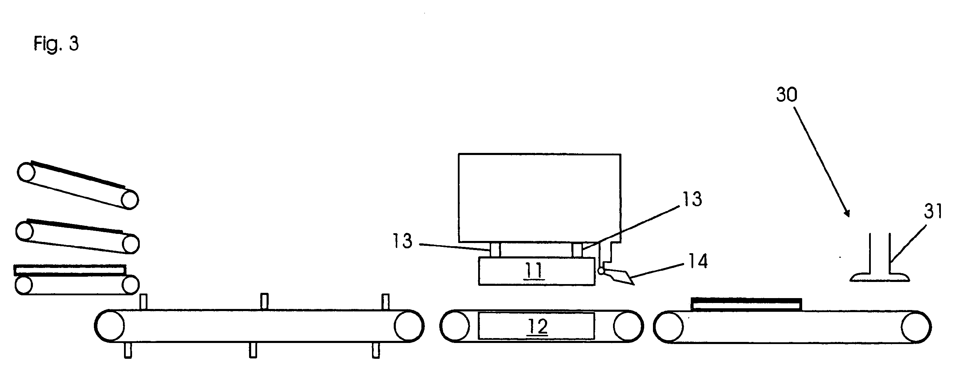

Das Pressenförderband 2 verfährt das Preßgut 40 zu dem aus BOPET gefertigten Abnahmeförderband 3, das das Preßgut 40 zu einer Abnahmestation 30 verfährt. Dies ist in Fig.3 dargestellt. In der Abnahmestation 30 wird das Preßgut 40 mittels eines Saughebers 31 vom Abnahmeförderband 3 abgehoben.

Da das Ein- und Austragen teilweise parallel verlaufen, beträgt die gesamte Chargierzeit 6 Sekunden. Die Chargierzeit ist deshalb so kurz, weil im Gegensatz zu Anlagen nach dem Stand der Technik, bei denen das Preßgut in die Presse abgelassen und nach dem Verpressen wieder herausgehoben wird, bei der vorliegenden Erfindung Beschicken, Verpressen und Austragen in einer Ebene ablaufen. Weiterhin entfällt die Handhabung der Beschickvorrichtungen vor dem Pressen. Schließlich ist durch die Tatsache, daß das in die Presse eingefahrene Paket nur noch die Höhe des Preßguts aufweist, der Hubweg der oberen Preßplatte verkürzt, und somit auch die Zeit für das Verfahren der Preßplatte.

## Patentansprüche

1. Verfahren zum Aufpressen einer mindestens einlagigen Oberflächenbeschichtung auf eine Holzwerkstoffplatte (41) in einer Kurztaktpresse (10), die eine obere und eine untere beheizbare Preßplatte (11,12) sowie eine Beschickvorrichtung (100) umfaßt, wobei
- mittels der Beschickvorrichtung (100) wenigstens eine Lage eines Beschichtungsmaterials auf der Oberseite der Holzwerkstoffplatte (41), die eine unterseitig flüssig aufgetragene, getrocknete, nicht-ausgehärtete, duroplastische Kunstharzschicht aufweist, positioniert und in einer definierten Position gehalten wird und diese dann in den Raum zwischen den Preßplatten (11,12) eingebracht wird
- anschließend die Oberflächenbeschichtung mit der Holzwerkstoffplatte (41) verpresst wird
- und abschließend die beschichtete Holzwerkstoffplatte (41) ausgetragen wird.

2. Verfahren nach Anspruch 1, **dadurch gekennzeichnet, daß** die Temperatur der Preßplatten (11,12) mindestens 180°C, bevorzugt mindestens 220°C, weiter bevorzugt mindestens 250°C beträgt.

3. Verfahren nach einem der vorstehenden Ansprüche, **dadurch gekennzeichnet, daß** die Chargierzeit unter 8 Sekunden, bevorzugt unter 7 Sekunden liegt.

4. Verfahren nach einem der vorstehenden Ansprüche, **dadurch gekennzeichnet, daß** die Preßzeit unter 10 Sekunden, bevorzugt unter 8 Sekunden, besonders bevorzugt unter 7 Sekunden liegt.

5. Verfahren nach einem der vorstehenden Ansprüche, **dadurch gekennzeichnet, daß** die Chargierzeit nicht größer als die Preßzeit ist.

6. Verfahren nach einem der vorstehenden Ansprüche, **dadurch gekennzeichnet, daß** sich beim Beschicken sowie beim Pressen die Kunstharzschicht auf der unteren Seite der Holzwerkstoffplatte (41) befindet, und daß sich die Oberflächenbeschichtung auf der oberen Seite befindet.

7. Verfahren nach einem der vorstehenden Ansprüche, **dadurch gekennzeichnet, daß** das verwendete Kunstharz Melamin, ein Harnstoffharz oder ein Phenolharz ist.

8. Verfahren nach einem der vorstehenden Ansprüche, **dadurch gekennzeichnet, daß** die Oberflächenbeschichtung aus zwei oder mehr Lagen besteht.

9. Beschickvorrichtung (100) für eine Kurztaktpresse (10), wobei diese gemäß einer ersten Alternative
- ein erstes Förderband (1) umfasst, das die Beschickstation (20) durchläuft, sowie ein zweites Förderband (2), das an das erste Förderband (1) anschließt und das eine Kurztaktpresse (10) sowie die Abnahmestation (30) durchläuft,
oder gemäß einer zweiten Alternative
- ein erstes Förderband (1) umfasst, das die Beschickstation (20) durchläuft, sowie ein zweites Förderband (2), das an das erste Förderband (1) anschließend angeordnet ist und die Kurztaktpresse (10) durchläuft, sowie ein drittes Förderband (3), das an das zweite Förderband (2) anschließend angeordnet ist und die Abnahmestation (30) durchläuft,
wobei
- im Betriebszustand eine Holzwerkstoffplatte (41) und wenigstens eine Lage eines Beschichtungsmaterials auf dem ersten Förderband (1) aufliegen und dort durch einen Anschlag (4) gegen Positionsveränderungen gesichert sind.

10. Vorrichtung nach Anspruch 9, **dadurch gekennzeichnet, daß** jeweils der Anschlag durch Leisten gebildet wird, die quer zur Laufrichtung des ersten Förderbandes (1) ausgerichtet sind.

11. Vorrichtung nach einem der Ansprüche 9 oder 10, **dadurch gekennzeichnet, daß** mindestens das zweite Förderband (2) aus einem Material mit einer Wärmeleitfähigkeit von über 5 JK⁻¹m⁻¹s⁻¹, bevorzugt über 20 JK⁻¹m⁻¹s⁻¹, weiter bevorzugt über 150 JK⁻¹m⁻¹s⁻¹, besteht.

12. Vorrichtung nach einem der Ansprüche 9 bis 11, **dadurch gekennzeichnet, daß** mindestens das zweite Förderband (2) temperaturbeständig bis wenigstens 200°C, bevorzugt bis wenigstens 250°C, besonders bevorzugt bis wenigstens 280°C, ist.

13. Vorrichtung nach einem der Ansprüche 9 bis 12, **dadurch gekennzeichnet, daß** mindestens das zweite Förderband (2) aus Aramid besteht und mit Polytetrafluoroethylen beschichtet ist.

14. Vorrichtung nach einem der Ansprüche 9 bis 13, **dadurch gekennzeichnet, daß** ihre Leistungsaufnahme unter 40 kW, bevorzugt unter 30 kW, besonders bevorzugt unter 20 kW beträgt.

15. Vorrichtung nach einem der Ansprüche 9 bis 14, **dadurch gekennzeichnet, daß** sie eine Vorrichtung (30) zur Abnahme der verpressten Materialien umfaßt.

16. Kurztaktpresse (10), **dadurch gekennzeichnet, daß** diese eine Beschickvorrichtung (100) gemäß einem der Ansprüche 9 bis 15 umfaßt.

17. Kurztaktpresse nach Anspruch 16, **dadurch gekennzeichnet, daß** Mittel zur Positionssicherung (14) einer Holzwerkstoffplatte (41) an oder in der Kurztaktpresse (10) angeordnet sind.

18. Kurztaktpresse nach Anspruch 16 oder 17, **dadurch gekennzeichnet, daß** ein Anschlag (4) zur Positionssicherung einer Holzwerkstoffplatte (41) angeordnet ist.

19. Kurztaktpresse nach einem der Ansprüche 16-18, **dadurch gekennzeichnet, daß** jeweils ein Anschlag (4) durch Leisten gebildet wird, die quer zur Laufrichtung eines Förderbandes (2) ausgerichtet sind.

## Claims

1. A method for pressing a surface coating of at least one layer onto a composite wood board (41) in a short cycle press (10), which comprises an upper and a lower heatable press plate (11, 12) and a feeding device (100), wherein
- by means of the feeding device (100), at least one layer of a coating material is positioned, and held in a defined position, on the surface of the composite wood board (41), which has a dried, non-hardened duroplastic synthetic resin layer applied as a fluid on the lower side, and then this is introduced into the space between the press plates (11, 12),
- then the surface coating is pressed with the composite wood board (41),
- and subsequently the coated composite wood board (41) is discharged.

2. The method according to claim 1, **characterized in that** the temperature of the press plates (11, 12) is at least 180°C, preferably at least 220°C, further preferably at least 250°C.

3. The method according to one of the preceding claims, **characterized in that** the batch time is less than 8 seconds, preferably less than 7 seconds.

4. The method according to one of the preceding claims, **characterized in that** the press time is less than 10 seconds, preferably less than 8 seconds, particularly preferably less than 7 seconds.

5. The method according to one of the preceding claims, **characterized in that** the batch time is not longer than the press time.

6. The method according to one of the preceding claims, **characterized in that** during feeding and during pressing, the synthetic resin layer is located on the lower side of the composite wood board (41), and that the surface coating is located on the upper side.

7. The method according to one of the preceding claims, **characterized in that** the synthetic resin used is melamine, a urea resin or a phenolic resin.

8. The method according to one of the preceding claims, **characterized in that** the surface coating is composed of two or more layers.

9. A feeding device (100) for a short cycle press (10), wherein this according to a first alternative
- comprises a first conveyor belt (1), which passes through the feeding station (20), and a second conveyor belt (2), that is adjacent to the first conveyor belt (1) and passes through a short cycle press (10) and the removal station (30),
or according to a second alternative
- comprises a first conveyor belt (1), which passes through the feeding station (20), and a second conveyor belt (2), that is disposed adjacent to the first conveyor belt (1) and passes through the short cycle press (10), and a third conveyor belt (3), that is disposed adjacent to the second conveyor belt (2) and passes through the removal station (30),
wherein
- in the operating state a composite wood board (41) and at least one layer of a coating material lie on top of the first conveyor belt (1) and arc secured there against changes in position by a stop (4).

10. The device according to claim 9, **characterized in that** in each case the stop is formed by bars that are aligned transverse to the direction of travel of the first conveyor belt (1).

11. The device according to one of the claims 9 or 10, **characterized in that** at least the second conveyor belt (2) is composed of a material with thermal conductivity of greater than 5 JK⁻¹m⁻¹s⁻¹, preferably greater than 20 JK¹⁻m⁻¹s⁻¹, further preferably greater than 150 JK⁻¹m⁻¹s⁻¹.

12. The device according to one of the claims 9 to 11, **characterized in that** at least the second conveyor belt (2) is temperature resistant up to at least 200°C, preferably up to at least 250°C, particularly preferably up to at least 280°C.

13. The device according to one of the claims 9 to 12, **characterized in that** at least the second conveyor belt (2) is composed of aramid and is coated with polytetrafluoroethylene.

14. The device according to one of the claims 9 to 13, **characterized in that** the power consumption thereof is less 40 kW, preferably less than 30 kW, particularly preferably less than 20 kW.

15. The device according to one of the claims 9 to 14, **characterized in that** the device comprises a device (30) for removing the pressed materials.

16. A short cycle press (10), **characterized in that** it comprises a feeding device (100) according to one of the claims 9 to 15.

17. The short cycle press according to claim 16, **characterized in that** means for positionally securing (14) a composite wood board (41) are disposed at or in the short cycle press (10).

18. The short cycle press according to claim 16 or 17, **characterized in that** a stop (4) is disposed for positionally securing a composite wood board (41).

19. The short cycle press according to one of the claims 16 to 18, **characterized in that** in each case, a stop (4) is formed by bars that are aligned transverse to the direction of travel of the first conveyor belt (2).

## Revendications

1. Procédé d'application d'un revêtement de surface ayant au moins une couche sur une plaque de matière dérivée du bois (11) dans une presse à cycle court (10) qui comprend un plateau de serrage supérieur et un plateau de serrage inférieur chauffants (11, 12) ainsi qu'un dispositif d'alimentation (100), dans lequel
- au moins une couche d'un matériau d'enduction qui présente une couche de résine synthétique duroplastique appliquée sous forme liquide sur le côté inférieur, séchée, non durcie, est positionnée sur le côté supérieur de la plaque de matière dérivée du bois (41) au moyen du dispositif d'alimentation (100) et maintenue dans une position définie, et celle-ci est ensuite introduite dans l'espace entre les plateaux de serrage (11, 12),
- le revêtement de surface est ensuite comprimé avec la plaque de matière dérivée du bois (41)
- et la plaque de matière dérivée du bois enduite (41) est enfin évacuée.

2. Procédé selon la revendication 1, **caractérisé en ce que** la température des plateaux de serrage (11, 12) se monte à au moins 180°C, de préférence au moins 220°C, de manière davantage préférée au moins 250°C.

3. Procédé selon l'une quelconque des revendications précédentes, **caractérisé en ce que** le temps de chargement est inférieur à 8 seconde, de préférence inférieur à 7 secondes.

4. Procédé selon l'une quelconque des revendications précédentes, **caractérisé en ce que** le temps de compression est inférieur à 10 secondes, de préférence inférieur à 8 secondes, de manière particulièrement préférée inférieur à 7 secondes.

5. Procédé selon l'une quelconque des revendications précédentes, **caractérisé en ce que** le temps de chargement n'est pas supérieur au temps de compression.

6. Procédé selon l'une quelconque des revendications précédentes, **caractérisé en ce que** la couche de résine synthétique se trouve sur le côté inférieur de la plaque de matière dérivée du bois (41) lors de l'alimentation ainsi que lors de la compression, et que le revêtement de surface se trouve sur le côté supérieur.

7. Procédé selon l'une quelconque des revendications précédentes, **caractérisé en ce que** la résine synthétique utilisée est de la mélamine, une résine d'urée ou une résine phénolique.

8. Procédé selon l'une quelconque des revendications précédentes, **caractérisé en ce que** le revêtement de surface se compose de deux couches ou plus.

9. Dispositif d'alimentation (100) pour une presse à cycle court (10), dans lequel celui-ci comprend selon une première alternative
- une première courroie de transport (1) qui traverse la station d'alimentation (20), ainsi qu'une seconde courroie de transport (2) qui se raccorde à la première courroie de transport (1) et qui traverse une presse à cycle court (10) ainsi que la station de contrôle (30),
ou comprend selon une seconde alternative
- une première courroie de transport (1) qui traverse la station d'alimentation (20), ainsi qu'une deuxième courroie de transport (2) qui est disposée à la suite de la première courroie de transport (1) et traverse la presse à cycle court (10), ainsi qu'une troisième courroie de transport (3) qui est disposée à la suite de la deuxième courroie de transport (2) et traverse la station de contrôle (30),
dans lequel
- une plaque de matière dérivée du bois (41) et au moins une couche d'un matériau d'enduction reposent à l'état de fonctionnement sur la première courroie de transport (1) et y sont sécurisées à l'encontre de changements de position par une butée (4).

10. Dispositif selon la revendication 9, **caractérisé en ce que** la butée est à chaque fois formée par des baguettes qui sont orientées de manière transversale au sens de roulement de la première courroie de transport (1).

11. Dispositif selon l'une quelconque des revendications 9 ou 10, **caractérisé en ce qu'**au moins la seconde courroie de transport (2) se compose d'un matériau avec une conductibilité thermique supérieure à 5 JK⁻¹m⁻¹s⁻¹, de préférence supérieure à 20 JK⁻¹m⁻¹s⁻¹, de manière davantage préférée supérieure à 150 JK⁻¹m⁻¹s⁻¹.

12. Dispositif selon l'une quelconque des revendications 9 à 11, **caractérisé en ce qu'**au moins la seconde courroie de transport (2) est résistante à une température allant jusqu'au moins 200°C, de préférence jusqu'au moins 250°C, de manière particulièrement préférée jusqu'au moins 280°C.

13. Dispositif selon l'une quelconque des revendications 9 à 12, **caractérisé en ce qu'**au moins la seconde courroic de transport (2) se compose d'aramide et est enduite de polytétrafluoroéthylène.

14. Dispositif selon l'une quelconque des revendications 9 à 13, **caractérisé en ce que** sa puissance absorbée se monte à moins de 40 kW, de préférence moins de 30 kW, de manière particulièrement préférée moins de 20 kW.

15. Dispositif selon l'une quelconque des revendications 9 à 14, **caractérisé en ce qu'**il comprend un dispositif (30) pour le levage des matériaux comprimés.

16. Presse à cycle court (10), **caractérisée en ce que** celle-ci comprend un dispositif d'alimentation (100) selon l'une quelconque des revendications 9 à 15.

17. Presse à cycle court selon la revendication 16, **caractérisée en ce que** des moyens pour sécuriser la position (14) d'une plaque de matière dérivée du bois (41) sont disposés sur ou dans la presse à cycle court (10).

18. Presse à cycle court selon la revendication 16 ou 17, **caractérisée en ce qu'**une butée (4) est disposée pour sécuriser la position d'une plaque de matière dérivée du bois (41).

19. Presse à cycle court selon l'une quelconque des revendications 16 à 18, **caractérisée en ce qu'**une butée (4) est à chaque fois formée par des baguettes qui sont orientées de manière transversale au sens de roulement d'une courroie de transport (2).
